# EUROPEAN PATENT SPECIFICATION

(11) **EP 0 729 710 B1**
(45) Date of publication and mention of the grant of the patent: **23.01.2002**
(21) Application number: 96103234.9
(22) Date of filing: 02.03.1996
(51) Int. Cl.: A23L 1/328, A23L 1/327, A23J 1/04, A23C 11/06, A23L 1/30, A23L 1/305

(54) **A nutritive composition containing milt**
Nahrungsmittelzusammensetzung mit Fischmilch
Composition alimentaire contenant de la laitance

(30) Priority: 03.03.1995 JP 4375095
(43) Date of publication of application: 04.09.1996
(73) Proprietor: SNOW BRAND MILK PRODUCTS CO., LTD., Sapporo-shi, Hokkaido 065 (JP)
(72) Inventor: Nakano, Taku, Sayama-shi, Saitama (JP); Kawakami, Hiroshi, Kawagoe-shi, Saitama (JP); Idota, Tadashi, Kawagoe-shi, Saitama (JP)
(74) Representative: Reitzner, Bruno, Dr.

(56) References cited:
- EP-A- 0 302 807
- WO-A-91/01647
- WO-A-94/04551
- WO-A-94/28153
- DE-C- 706 516
- FR-A- 1 286 769
- PATENT ABSTRACTS OF JAPAN vol. 012, no. 472 (C-551), 9 December 1988 & JP-A-63 192720 (RIKEN VITAMIN CO LTD), 10 August 1988, & DATABASE WPI Week 8838 Derwent Publications Ltd., London, GB; AN 88-266521 & JP-A-63 192 720 (RIKEN VITAMIN CO KK) , 10 August 1988
- DATABASE WPI Week 8926 Derwent Publications Ltd., London, GB; AN 89-189424 XP002001265 & JP-A-01 128 795 (HASEGAWA KK) , 22 May 1989
- PATENT ABSTRACTS OF JAPAN vol. 012, no. 316 (C-524), 26 August 1988 & JP-A-63 087963 (AMANO PHARMACEUT CO LTD), 19 April 1988, & DATABASE WPI Week 8821 Derwent Publications Ltd., London, GB; AN 88-145029 & JP-A-63 087 963 (AMANO PHARM KK) , 19 April 1988
- DATABASE WPI Week 8450 Derwent Publications Ltd., London, GB; AN 84-309010 XP002001266 & JP-A-59 192 068 (SEIWA KASEI KK) , 31 October 1984
- DATABASE WPI Week 8641 Derwent Publications Ltd., London, GB; AN 86-268733 XP002001267 & JP-A-61 195 651 (NICHIRO GYOGYO KK) & PATENT ABSTRACTS OF JAPAN vol. 011, no. 018 (C-398), 17 January 1987 & JP-A-61 195651 (NICHIRO GYOGYO KK), 29 August 1986,

## Description

The present invention relates to a nutritive composition for infants containing milt grinds and/or a milt fraction. The term 'nutritive composition for infants' of the present invention means infant formula, protein-hydrolyzed milk, follow up formula and special nutritive modified milk, which are prepared for infants; and weaning foods for infants. Further, the nutritive composition for infants of the present invention includes powdered milk and weaning foods, which are dried and powdered.

### BACKGROUND OF THE INVENTION

The milt is collected from salmon, trout, cod, herring and the like. Only part of the milt is utilized for food, and most of it is discarded. Thus it is a un-utilized source. It has been known that the milt contains many effective components such as nucleic acid consisting mainly of DNA and basic proteins consisting mainly of protamine. Techniques of extraction of these effective components from the milt have been researched variously. For example, many methods, such as a method for preparing deoxyribonucleic acid (DNA) (Japanese Un-Examined Patent Publication No.Hei 1-128795), a method for preparing protamine (Japanese Un-Examined Patent Publications Nos. Sho 62-187491, Sho 63-301900, Hei 2-264800 and Hei 2-279699) are disclosed.

However, physiological effects of the milt when it is administered orally, was scarcely made clear. Recently, nucleic acids contained in the milt are only begun to be utilized for health food for preventing aging and diseases of adult, and for preservatives for food due to the antibacterial properties of the basic proteins. The nutritive foods are disclosed in Japanese Un-Examined Patent Publications Nos.sho 61-195651, 61-40766 and 61-152963. However, these foods are intended to improve generative abilities of adults and persistency. Thus although many techniques concerning the milt have been reported, the milt is only utilized in foods for adults.

On the other hand, as to nutritive compositions for infants, products which are very similar to mother's milk which is the final object with regard to components, appeared in the market owing to the recent improvements of technology. However, in view of functions thereof, there remained many problems compared to mother's milk. In particular, in view of functions such as the fecal improvement of diarrhea and green feces and the like, the improvements of nitrogen utilization ratio, the improvements of digestive and absorptive properties, the prevention of allergic disease, the immunopotentiation, the improvements of enterobacterial flora including bacteriostasis of noxious bacteria, the improvement of iron absorption, the improvements of lipid metabolism, the improvement of learning abilities and bone reinforcement, these nutritive compositions for infants are not deemed to be sufficient compared to mother's milk.

### SUMMARY OF THE INVENTION

Therefore, the present inventors have researched earnestly on nutritive composition for infants in order to obtain a composition having more similar functions as mother's milk. As the results, the present inventors have found that effects, which had not been obtained in the conventional nutritive composition for infants, may be obtained by containing the milt grinds or milt fraction in a nutritive composition for infants.

An object of the present invention is to provide a nutritive composition for infants having the same functions as mother's milk.

In accordance with the present invention, there is provided a nutritive composition for infants containing milt grinds and/or milt fraction.

In accordance with the present invention, there is further provided the nutritive composition for infants containing milt grinds and/or milt fraction in an amount of 0.01 to 10 weight% based on the solid contents of the composition.

In accordance with the present invention, there is further provided the nutritive composition for infants wherein the milt grinds are prepared by removing outer skin of the milt, grinding, and deodorizing it with one or more of the solutions selected from the group consisting of water, brine and alcohol.

In accordance with the present invention, there is further provided the nutritive composition for infants wherein the milt fraction is prepared by deodorizing the milt, and treating it by one or more methods selected from the group consisting of acid-extraction and enzyme hydrolysis.

In accordance with the present invention, there is further provided the nutritive composition for infants wherein the milt fraction is prepared by deodorizing the milt, treating it by one or more methods selected from the group consisting of acid-extraction and enzyme hydrolysis, and further purifying it by one or more methods selected from the group consisting of precipitation fractionation, ion exchange resin method, gel filtration method, membrane fractionation or electrodialysis.

### DETAILED DESCRIPTION OF THE INVENTION

The present invention will be explained in detail hereinafter.

The nutritive composition for infants of the present invention consists proteins, lipids, carbohydrates, vitamins and minerals as main components, however, it may contain another effective components which may be contained in nutritive compositions for infants.

As proteins, milk proteins such as casein, whey proteins concentrates (WPC), whey proteins isolates (WPI), αs-casein, β-casein, α-lactalbumin and β-lactoglobulin; milk protein fractions, egg proteins; plant proteins such as soy bean proteins and wheat proteins, may be contained in the nutritive composition. Further these proteins may be treated with acids or enzymes, and may be contained in the composition in the forms of peptides or free amino acids. The free amino acids may be used so as to provide a specific physiological activity besides as the nitrogen source. Taurine, cystine, cysteine, arginine, glutamine and the like may be exemplified. These proteins, peptides or free amino acids are preferably contained in the nutritive composition in an amount of 5 to 30 weight% based on the basis of solid contents of the composition.

As carbohydrates, starch, soluble polysaccharide, dextrin, sucrose, lactose, maltose, glucose, oligosaccharides such as 6'-galactosyl lactose, fructooligosaccharide, lactulose, or any artificial sweeteners may be exemplified, and one of these carbohydrates may be used. The amount of the carbohydrate contained in the nutritive composition is preferably 40 to 80 weight% per solid contents of the composition.

As lipids, animal fat such as milk fat, lard, beef tallow and fish oils; vegetable oils such as soybean oil, rapeseed oil, corn oil, coconut oil, palm oil, palm pit oil, safflower oil, perilla oil, linseed oil, evening primrose oil, middle-chain fatty triglyceride (MCT) and cottonseed oil; fractional oil, hydrogenated oil (hardened) or interesterificated oil thereof may be exemplified, and one or more of these oils may be used. The lipids may be preferably contained in the nutritive composition for infants in an amount of 40 weight% or less per solid contents of the composition.

As vitamins and minerals, one or more of the vitamins and minerals which may be used for nutritive compositions for infant and which are described in Codex alimentarius volume four foods for special dietary uses (including foods for infants and children), second edition, Food and Agriculture Organization of the United Nations and World Health Organization,(1994), CAC/VOL.IX-1th edition and Supplement 1,2,3,4 (1993), published by Nihon Kokusai Rakuno Renmei', '1993 Handbook for Specified Item Food additives (revised the 31st edition) (1993), published by Shokuhin to Kagakusha', and 'Handbook for Application systems for Food Additives and Natural Food Materials (the 12th edition) (1992), published by shokuhin to Kagakusha'.

As vitamins, vitamin A, Bs, C, D, E, Ks, folic acid, pantothenic acid, β-carotene, nicotinic acid amide and the like may be exemplified. The amount of the vitamin contained in the nutritive composition is preferably in an amount of 10mg to 5g weight% based on the solid contents of the composition.

As minerals, calcium, magnesium, potassium, sodium, iron, copper, zinc, iodine, manganese, selenium and the like may be exemplified. The minerals are preferably contained in the nutritive composition for infants in an amount of lmg to 5g weight% based on solid contents of the composition.

In the present invention, the nutritive composition for infant consisting of the above-mentioned proteins, lipids, carbohydrates, vitamins and minerals as main components, contains milt grinds and/or milt fraction. The milt may be collected from any marine products such as salmon, trout, cod, herring, cuttlefish and scallop. However, it is preferable to use milt of the marine products having high catch amounts such as salmon, trout and cod, in view of the effective utilization of resources. In this connection, the components of the milt of salmon and herring are shown in the following Table 1.

**Table 1**

| Milt Components | Salmon (per100g) | Herring (per100g) |
|---|---|---|
| Water | 80g | 78g |
| Lipids | 0.5g | 2.5g |
| Ash | 1.3g | 1.4g |
| Nucleic Acid | approx.12g | approx.12g |
| Protamine | approx.6g | approx.6g |
| Polyamine | approx.35mg | approx.30-35mg |

Preferably, outer skin is removed and the milt was homogenized and ground to make paste or liquid, since these milt can not contained in the composition as it is. Thus treated milt has strong odor such as fish odor peculiar to milt. Therefore, the milt is preferably used after carrying out the deodorizing treatment and purification treatment and the like. To deodorize the milt, water, brine or alcohol solution or combination thereof are added to the paste or liquid milt, and the milt is washed with stirring. Then outer skin or impurities such as blood components are removed by a centrifuging or filtration and the like, and milt grinds are collected. Since the milt grinds prepared by deodorizing and removing impurities, have decreased odor, it may be added and mixed with the nutritive composition for infant even if it is made into liquid, slurry, paste or powder by freeze drying or spray drying so that it is easily used during process.

Then the milt grinds which are treated by deodorizing and impurities-removing, may be treated by one or more of the methods selected from the group consisting of acid- extraction and enzyme hydrolysis, and may be contained in the nutritive composition for infants. The extraction treatment method with acid comprises, for example, adding 0.01N to 6N of mineral acids such as sulfuric acid or hydrochloric acid to the solution containing the milt grinds which have been deodorized and impurities-removed, and stirring at 30 to 80°C for 0.5 to 6 hours, and then centrifuging so as to divide into supernatant and precipitates, and collecting the precipitates as milt fraction.

The hydrolysis treatment method with enzyme comprises, for example, adding protease and/or nuclease in an amount of 10 to 10,000,000 Unit (depending on the amount of the milt treated) to the solution containing the milt grinds which have been deodorized and impurities-removed, and activating the enzymes with stirring at 20 to 70°C for 0.5 to 8 hours, then centrifuging the milt so as to divide into supernatant and precipitate, and collecting the precipitates as milt fraction. The milt is converted into an more easily digested and absorbed form by the enzyme hydrolysis treatment, and the milt will become appropriate for infants whose digestive and absorptive properties are immature.

The milt fraction may be treated by both of the acid-extraction and enzyme hydrolysis. As the protease which may be used, enzymes derived from animals and vegetables such as trypsin, papain, and enzymes produced by microorganisms belonging to such as Aspergillus genus, Rhizopus genus and Bacillus genus may be exemplified. As the nuclease, deoxyribonuclease derived from animals or microorganisms may be exemplified.

As described above, the supernatant fraction of the milt treated by acid-extraction, contains protamine as a main components and nucleic acid and trace amount of polyamine. The contents thereof are varied depending on the kinds of the marine products from which the milt is collected, but nucleic acid:protamine is about 1:9. On the other hand, nucleic acid:protamine of the precipitates fraction of the milt is about 8:2.

Thus obtained milt fraction is contained in the nutritive composition for infant. By the results of the inventor's test, the supernatant fraction has strong effects on the improvement of diarrhea and the improvement of green stool, and the precipitates fraction has strong effects on the improvement of nitrogen utilization ratio and the improvement of digestive and absorptive properties. Therefore, it is efficient to contain each fraction in the nutritive composition for infant depending on the purposes. In addition, it is of course possible to contain the supernatant fraction and the precipitates fraction together, by which the effects of the both fractions may be exhibited.

Further, the supernatant fraction and the precipitate fraction prepared by acid and/or enzyme treatment, may be purified with one or more of the methods selected from the group consisting of precipitation fractionation, ion exchange resin method, gel filtration method, membrane separation and electrodialysis. As the purification method, for example, when the supernatant is fractionated, a fractionation method comprising cooling to 15°C or less and leaving to stand, a fractionation method comprising adding inorganic salts such as sulfate and hydrochloride and leaving to stand, a fractionation method comprising adding alcohol and leaving to stand may be utilized. As the ion exchange resin, ion exchange resin having such as sulfonic group, sulfopropyl group, phosphoric group, carboxymethyl group, aminoethyl group, diethylamino group, tertiary aminoethyl group and tertiary ammonium group may be used. The purification may be carried out by running them through the column and the like filled with these resins, and contacting them with it. In addition, membrane separation method and gel filtration method may be applied since the molecular weights of the polyamine and protamine are different from each other. The molecular weight of polyamine is approximately 90 to 200, and that of protamine is approximately 1,000 to 12,000. To fractionate them, an appropriate ultrafiltration membrane, micro filtration membrane, reverse osmosis membrane or gel filtration membrane may be selected. In the above methods, any methods are applied in combination with each other so as to improve the purification degrees.

In addition, the above purification methods may be applied to the precipitation fraction, and may fractionate into polyamine, protamine and nucleic acids.

The milt grinds or milt fraction which are prepared by each process as described above, are contained in the nutritive composition for infants singly or in mixed with each other. The amounts of them contained in the composition are 0.01 to 10 weight% based on solid contents of the composition. If the amounts are less than 0.01 weight%, the effects such as fecal improvements, the improvements of nitrogen utilization ratio improvements, the prevention of digestive and absorptive properties and the inhibition of allergic disease, can not obtained. On the other hand, the amounts are 10 weight% or more, there will be problems e.g., odor peculiar to milt will be increased, and qualities of the products will be decreased.

By the nutritive composition for infant containing the milt grinds and/or milt fraction of the present invention, the effects of immunization, the improvements of enterobacterial flora including bacteriostasis of noxious bacteria, the enhancement of iron absorption, the improvement of lipid metabolism, the improvement of learning abilities and bone reinforcement, besides the effects of the fecal improvements, the improvements of nitrogen utilization ratio, the improvements of the digestive and absorptive properties and the prevention of allergic disease.

The nutritive composition for infants may be used in appropriate useful forms such as not only liquids but powders and tablets.

The present invention will be explained in more detail by way of the following examples. However, the examples are not intended to restrict the scope of the present invention.

### EXAMPLE 1

### (Preparation of Milt Fraction)

After washing 1kg of salmon milt whose outer skin had been removed, the milt was dehydrated. Further 3L of water was added to the milt, and homogenate was prepared with a homogenizer. 3L of 1N hydrochloric acid was added to it and acid-extraction was carried out with stirring at 40°C for 3 hours. After completing the extraction, centrifuging was carried out to fractionate supernatant and precipitations. After cooling the supernatant at 4°C for 4 hours, the precipitated protamine fraction was removed by centrifuging to obtain supernatant. The supernatant fraction was neutralized with 30% sodium hydroxide solution and then freeze-dried. 1g of the obtained powdered milt fraction contained 300mg of polyamine and 10mg of protamine.

### (Preparation of Infant Formula)

7.5kg of Whey Protein Concentrates (WPC) and 44kg of lactose were added and dissolved in 240kg of defated milk. The solution and each 1kg of water-soluble vitamin components (Vitamin B₁, B₂, B₆, B₁₂, C, niacin, folic acid, pantothenic acid, biotin, choline, inositol) and of mineral components (calcium carbonate, potassium chloride, magnesium sulfate, sodium ferrous citrate, copper sulfate, zinc sulfate), a solution in which 100g of the milt fraction powder prepared as described above was suspended and dissolved in 300g of hot water, and 23.9kg of modified fat in which fat-soluble vitamins (Vitamin A, D, E, K, β-carotene) were dissolved, were mixed and homogenized. The solution thus obtained was sterilized, concentrated with a conventional method, dried to obtain 100kg of milk powder. The infant formula, prepared by dissolving the milk powder in hot water so as to adjust to have 13% of solid rate, contained 13mg/100ml of the milt component.

### EXAMPLE 2

### (Preparation of Milt Fraction)

3L of water was added to 2kg of salmon milt whose outer skin had been removed, and homogenate was prepared with a homogenizer. 4L of 3N sulfuric acid was added to it, and acid-extraction was carried out with stirring at 45°C for 4 hours. After completing the extraction, centrifuging was carried out to fractionate supernatant and precipitations. After the supernatant was neutralized with 30% sodium hydroxide solution, it was run through a column filled with carrier for gel filtration, and a lower molecular weight fraction was collected with a molecular weight fractionation. Then the lower molecular weight fraction was freeze-dried. 1g of thus obtained powder milt fraction contained 650mg of polyamine and 10mg of protamine.

### (Preparation of Infant Formula)

9.4kg of WPC and 55kg of lactose were dissolved in 300kg of hot water. The solution was mixed with a solution in which 7.1kg of casein was dissolved in a certain amount of alkali, each 1kg of vitamin and mineral components (as described in Example 1), a solution in which 1.5kg of the milt fraction prepared as described above was suspended and dissolved in 10kg of water, and 23.9kg of modified fat in which fat-soluble vitamin components (as described in Example
1) were dissolved, and the mixture was homogenized. The solution thus obtained was sterilized, concentrated with a conventional method, dried to obtain 100kg of milk powder. The infant formula prepared by dissolving the milk powder in hot water so as to adjust to have 13% of solid rate, contained 195mg/100ml of milt component.

### EXAMPLE 3

### (Preparation of Milt Grinds)

3L of water was added to 2kg of salmon milt whose outer skin had been removed, and homogenate was prepared with a homogenizer. After adding 3L of hot water at 40°C to the homogenate and treating it by washing, it was centrifuged and precipitate fraction was collected. In the same manner, it was treated by washing with 10% sodium chloride solution and 50% ethanol solution successively to carry out the removal of impurities and the deodorizing treatment. The treated materials were freeze-dried and powdered. 1g of the powdered milt grinds contained 500mg of nucleic acid, 400mg of protamine and 2mg of polyamine.

### (Preparation of Infant Formula)

700g of whey powder and 10g of lactose were dissolved in 3kg of hot water. To the solution, each 10g of vitamin and mineral components (as described in Example 1), 500mg of the milt fraction prepared as described above, 2.39g of degreased milk, and 239g of vegetable oil were added, and homogenized. The solution thus obtained was sterilized, concentrated with a conventional method and dried to obtain 1kg of milk powder. The infant formula prepared by dissolving the milk powder in hot water so as to have 13% of solid rate, contained 6.5mg/100ml of the milt component.

### TEST EXAMPLE 1

### (Confirmation Test of the Effects on the Improvement of Diarrhea)

3 to 9 months old, crab-eating macaque infants were divided into the following 4 groups and a test was carried out.
(1) a group in which modified milk prepared by dissolving the infant formula obtained in Example 1 into hot water was administered to crab-eating macaque infants having symptom of diarrhea, except that the milt was not contained in the milk (hereinafter referred to as 'control group').
(2) a group in which modified milk prepared by dissolving the infant formula obtained in Example 1 into hot water was administered to crab-eating macaque infants having symptom of diarrhea (hereinafter referred to as 'added milk group').
(3) a group in which mother's milk was administered to crab-eating macaque infants having symptom of diarrhea (hereinafter referred to as 'mother's milk group').
(4) a group in which mother's milk was administered to crab-eating macaque infants having no symptom of diarrhea (hereinafter referred to as 'normal group').

The fecal conditions (defecation times and hardness) of the crab-eating macaque infants divided into 4 groups as described above before and after the test, were observed. The hardness of feces were evaluated using 6 grades, i.e., aqueous, soft, normal, slight hard, hard and very hard. The results will be shown in Tables 2 and 3. The aqueous feces condition was defined as diarrhea.

**Table 2**

| DEFECATION TIMES BEFORE AND AFTER THE TEST | | | | | | | |
|---|---|---|---|---|---|---|---|
| | (1) Control Group | | (2) Added Milk Group | | (3) Mother's Milk Group | | (4) Normal Group |
| | Before | After | Before | After | Before | After | |
| 10 or more times /day | 5 | 2 | 6 | 0 | 7 | 0 | 0 |
| 6 - 9 times /day | 2 | 2 | 1 | 1 | 1 | 2 | 1 |
| 3 - 5 teims /day | 0 | 2 | 0 | 2 | 0 | 2 | 3 |
| 2 or less times/day | 0 | 1 | 0 | 4 | 0 | 4 | 3 |
| skdsdksk (Unit:Numbers of Anim | | | | | | | |

**Table 3**

| HARDNESS OF FECES BEFORE AND AFTER THE TEST | | | | | | | |
|---|---|---|---|---|---|---|---|
| | (1) Control Group | | (2) Added Milk Group | | (3) Mother's Milk Group | | (4) Normal Group |
| | Before | After | Before | After | Before | After | |
| Aqueous | 7 | 4 | 7 | 0 | 8 | 0 | 0 |
| Soft | 0 | 2 | 0 | 2 | 0 | 2 | 3 |
| Normal | 0 | 1 | 0 | 5 | 0 | 6 | 4 |
| Slight Hard | 0 | 0 | 0 | 0 | 0 | 0 | 0 |
| Hard | 0 | 0 | 0 | 0 | 0 | 0 | 0 |
| Very Hard | 0 | 0 | 0 | 0 | 0 | 0 | 0 |
| (Unit:Numbers of Animals) | | | | | | | |

Tables 2 and 3 show that in the added milk group, the defecation times clearly decreased than before the administration, and as for the hardness of feces, normal feces increased compared to the control group, and fecal conditions were changed to the same as the mother's milk group and the normal group. Thus it was proved that the milt fractionate improves diarrhea conditions, and it approximate the fecal conditions to those of mother's milk.

### TEST EXAMPLE 2

### (Confirmation Test of Effects on the Improvements of Green Feces)

1 to 7 months old infants having symptoms of green feces were object and they were divided into the following three groups;
(1) a group in which modified milk prepared by dissolving the infant formula obtained in the same manner as described in Example 2 into hot milk was administered, except that the milt fraction was not contained in the milk (hereinafter referred to as 'control group').
(2) a group in which modified milk prepared by dissolving the infant formula obtained in Example 2 into hot water was administered (hereinafter referred to as 'added milk group').
(3) a group in which mother's milk is administered (hereinafter referred to as 'mother's milk group').

The intake amounts of the modified milk were 600 to 1,200ml/day, and weaning foods and solid foods were freely taken during the period of the intake of modified milk. Provided that the contents of foods were approximated to foods before the test and the infants having weaning foods do not take special foods, and colors of feces before and after the test were observed. The colors of feces were evaluated with five grades, i.e., deep yellow, pale yellow, yellow-green, green and brown. The results will be shown in Table 4.

**Table 4**

| COLORS OF FECES BEFORE AND AFTER THE TEST | | | | | |
|---|---|---|---|---|---|
| | | Before Administration | (1) Control Group | (2) Added Milk Group | (3) Mother's Milk Group |
| Good | Deep Yellow | 0 | 1 | 2 | 1 |
| | Pale Yellow | 0 | 2 | 5 | 5 |
| | Yellow Green | 0 | 1 | 1 | 1 |
| | Green | 25 | 4 | 1 | 1 |
| Bad | Brown | 0 | 0 | 0 | 0 |
| (Unit:Numbers of Infants) | | | | | |

In the added milk group, the manifestation of green feces decreased clearly than before the intake compared to the control group, and the fecal conditions were changed to the same conditions as the mother's group. It was proved that the milt fraction improves the symptom of green feces and approximate the feces to mother's milk.

### TEST EXAMPLE 3

### (Confirmation Test of Effects on the Improvements of Nitrogen Utilization Ratio)

Wistar strain rats (20 days old, 10 animals) just after weaning were divided into a milt fraction-added feed administration group (hereinafter referred to as 'Added Feed Group') and a no milt fraction-added feed administration group (hereinafter referred to as 'Control Group'). The feed contains casein as protein source. In the Control Group, the milt fraction was added in an amount of 1.0g/100g, and the feed was adjusted to contain nitrogen in an amount of 1.6g/100g in the whole feed.

The milt fraction used was prepared by removing outer skin of salmon milt, homogenizing, adding 6N hydrochloric acid in the equivalent amount, acid-extracting at 40°C for 3 hours, and neutralizing with 50% sodium hydroxide solution, centrifuging to divide supernatant and precipitates, collecting the precipitates fraction, freeze-drying to make powder. The animals were made intake these feeds powder for 28 days, and protein efficiency rate (PER), biological value and net protein utilization (NPU) were determined. The results will be shown in Table 5.

**Table 5**

| RESULTS OF THE DETERMINATION OF PER, BIOLOGICAL VALUE AND NPU | | | |
|---|---|---|---|
| | PER | BIOLOGICAL VALUE | NPU (%) |
| Control Group | 3.1±0.3 | 80.2±5.4 | 80.4±5.2 |
| Added Feed Group | 3.7±0.1 | 90.1±3.3 | 89.9±3.4 |

The added feed group showed significantly high values in all items of PER, Biological Value and NPU compared to the control group. From the results, it was proved that the milt fraction has an effect to increase nitrogen utilization ratio.

### TEST EXAMPLE 4

### (Confirmation Test of Effect on Acceleration of Maturation of Gut)

Wister strain, infant rats (10 days old, 10 animals) were divided into an artificial milk administration group in which the milt grinds were added in an amount of 5mg/100ml (hereinafter referred to as 'Added Milk Group) and an artificial milk administration group in which the milt grinds were not added (hereinafter referred to as 'Control Group'). The milt grinds used were prepared by removing outer skin of salmon milt, homogenizing, washing with hot-water and alcohol, further freeze-drying and making powder. In both groups, stomach cannulation operation was carried out at the time of the 10th days after birth, and complete artificial nutrition was adopted. In the conditions, the artificial milk were administered for 10 days from the 10th to 20th days after birth. After fasting for one night, the rats were sacrificed by collecting whole blood under etherization at the time of the 21st day after birth, and small intestine was extracted. Small intestinal mucosa was scratched off from small intestine at ice-temperature, and it was suspended in cold physiological saline, and then small intestinal mucosa fraction was prepared with a homogenizer. The protein content of the small intestinal mucosa fraction was determined by means of Lowry method. In the determination of disaccharides-decomposition enzyme activity for lactase, sucrase and maltase, lactose, sucrose and maltose were used as substrates, and 50µl of substrate solution and 50µl of small intestinal mucosa were mixed, and incubated at 37°C for 30 minutes. Then 20µl of the reaction mixture was collected, and the amount of glucose, which was hydrolyzed by a enzyme in small intestinal mucosa and liberated, using a kit for the measurement of glucose (manufactured by Wako Pure Chemical Industries Co., ltd.), was determined. The results will be shown in Table 6. In the Table 6, the activities were shown by the amount of glucose produced for one minutes from 1g of proteins of small intestinal mucosa, in the unit of µmol. In addition, the characteristics of the maturation of gut were shown by the decreases of lactase activities and the increase of sucrase and maltase activities.

**Table 6**

| RESULTS OF THE DETERMINATION OF DISACCHARIDE-DECOMPOSITION ENZYME ACTIVITIES OF SMALL INTESTINAL MUCOSA | | | |
|---|---|---|---|
| | Lactase Activity(U)* | Sucrase Activity(U)* | Maltase Activity (U)* |
| Control Group | 70.1±8.6 | 39.2±5.4 | 170.4±12.1 |
| Added Milk Group | 35.2±8.1 | 77.1±4.3 | 235.9±13.4 |

| | | | |
|---|---|---|---|
| *(U)=(µmol/min/g protein) | | | |

From the results shown in Table 6, in the added milk group, the lactase activities decreased significantly and the increases of sucrase and maltase activities were found compared to the control group. Thus it was proved that the maturation of small intestinal mucosa was accelerated by the intake of the milt grinds.

### TEST EXAMPLE 5

### (Confirmation Test for Effects on Inhibition of Permeation of Allergen)

Wister strain, infant rats (10 days old, 10 animals) were divided into an artificial milk (containing 10mg/100ml of the milt grinds) administration group (hereinafter referred to as 'Added Milk Group') and an artificial milk (containing no milt grinds) administration group (hereinafter referred to as 'control group'). The milt grinds used were prepared by removing outer skin of salmon milt, straining after steaming the milt, further washing with hot water and brine, freeze-drying and making powder. In both groups, stomach cannulation operations were carried out at the time of the 10th days after birth, and complete artificial nutrition was adopted. Under the conditions, artificial milk was administered for 10 days from the 10th day to the 20th days after birth. At the time of the 21th day after birth, β-lactoglobulin (β-Lg) solution (10mg/100ml) was administered from the stomach cannula, and after one hour and two hours after, blood was collected. On the other hand, rabbits (white, Japanese species, male) were sensitized with β-Lg, and anti-β-Lg serum was obtained. Using the antiserum as primary antibody, the amount of β-Lg in blood was determined using blood collected after three hours by means of sandwich ELISA method with the second antibody labelled by horseradish peroxidase (PO). In addition, the anti-β-Lg antibody in blood after two hours was determined by means of ELISA method using β-Lg and anti-rat IgE antibody labelled with PO (manufactured by Nordick). The results will be shown in Table 7.

**Table 7**

| RESULTS OF THE DETERMINATION OF β-Lg AND β-LgIgE IN BLOOD | | |
|---|---|---|
| | β-Lg (ng/ml) | anti-β-LgIgE (ng/ml) |
| Control Group | 31.8±10.7 | 441.1±99.9 |
| Added Milk Group | 6.2±3.1 | 131.1±90.7 |

From the results shown in Table 7, in the added milk group, the amounts of migration of the β-Lg from digestive tract into blood and the amounts of the anti-β-LgIgE in blood were significantly low, compared with the control group. Therefore, it was proved that the permeation of allergen was inhibited by the intake of the milt grinds, and that the productions of antibodies which cause allergosis were inhibited.

As described above, the nutritive composition for infants containing milt grinds and/or milt fraction of the present invention have effects such as the fecal improvements of diarrhea and green feces, the acceleration of maturation of gut, the improvements of nitrogen utilization ratio, and the prevention of allergic disease.

Therefore, the nutritive composition for infant of the present invention are similar to mother's milk with the respect of functions, and it contributes to excellent growth of infants as the infants who grow up with mother's milk, when it is taken by infants. Thus the nutritive composition of the present invention is very useful.

## Claims

1. A nutritive composition for infants, **characterized in that** it contains
(a) milt grinds from which the outer skin has been removed and which has been deodorized with water, brine, alcohol or mixtures thereof; and/or
(b) a milt fraction obtained from that milt grinds which still contains protamine.

2. A nutritive composition as claimed in claim 1, wherein the milt grinds and/or the milt fraction are contained in the composition in an amount of 0.01 to 10 weight%, based on the solids contents of the composition.

3. A nutritive composition as claimed in claims 1 r 2, wherein the milt fraction (b) has been prepared by acid-extraction and/or enzyme hydrolysis.

4. A nutritive composition as claimed in claim 3, wherein the milt fraction has been further purified by precipitation fractionation, ion exchange resin treatment, gel filtration, membrane fractionation, electrodialysis or a combination of these methods.

5. A nutritive composition as claimed in any one of claims 1 to 4, which further comprises proteins, carbohydrates, lipids, vitamins and minerals.

6. Modified milk or weaning food, also in dried and powdered form, comprising a nutritive composition as defined in any one of claims 1 to 5.

## Patentansprüche

1. Nahrungsmittelzusammensetzung für Kleinkinder, **dadurch gekennzeichnet, daß** sie enthält:
a) gemahlene Fischmilch(zellen), von denen die äußere Haut entfernt wurde und die mit Wasser, Salzwasser, Alkohol oder deren Gemischen deodorisiert wurden, und/oder
b) eine Fischmilchfraktion, die aus den genannten gemahlen Fischmilch(zellen) erhalten wurde und die noch Protamin enthält.

2. Nahrungsmittelzusammensetzung nach Anspruch 1, worin die gemahlenen Fischmilch(zellen) und/oder die Fischmilchfraktion in der Zusammensetzung in einer Menge von etwa 0,01 bis 10 Gew.-bezogen auf den Feststoffgehalt der Zusammensetzung, enthalten sind.

3. Nahrungsmittelzusammensetzung nach Anspruch 1 oder 2, worin die Fischmilchfraktion (b) durch Säureextraktion und/oder Enzymhydrolyse hergestellt worden ist.

4. Nahrungsmittelzusammensetzung nach Anspruch 2, worin die Fischmilchfraktion durch Fällungsfraktionierung, Behandlung mit Ionenaustauscherharz, Gelfiltration, Membranfraktionierung, Elektrodialyse oder eine Kombination dieser Verfahren weiter gereinigt worden ist.

5. Nahrungsmittelzusammensetzung nach einem der Ansprüche 1 bis 4, welche weiterhin Proteine, Kohlenhydrate, Lipide, Vitamine und Mineralien enthält.

6. Modifizierte Milch oder Entwöhnungsnahrungsmittel auch in getrockneter und gepulverter Form, enthaltend eine Nahrungsmittelzusammensetzung nach einem der Ansprüche 1 bis 5.

## Revendications

1. Composition nutritive pour nourrissons, **caractérisée en ce qu'**elle contient
(a) des moutures de laitance dont on a enlevé la peau extérieure et qui ont été désodorisées avec de l'eau, une saumure, un alcool ou des mélanges de ceux-ci ; et/ou
(b) une fraction de laitance obtenue à partir des moutures de laitance qui contiennent encore de la protamine.

2. Composition nutritive selon la revendication 1, dans laquelle les moutures de laitance et/ou la fraction de laitance sont contenues dans la composition en une quantité de 0,01 à 10% en poids par rapport à l'extrait sec de la composition.

3. Composition nutritive selon les revendications 1 ou 2, dans laquelle la fraction de laitance (b) a été fabriquée par extraction par un acide et/ou par hydrolyse enzymatique.

4. Composition nutritive selon la revendication 3, dans laquelle la fraction de laitance a subi une purification plus poussée par fractionnement par précipitation, par traitement par une résine échangeuse d'ion, par filtration sur gel, par fractionnement sur membrane, par électrodialyse ou par une combinaison de ces procédés.

5. Composition nutritive selon l'une quelconque des revendications 1 à 4, qui comprend en outre des protéines, des hydrates de carbone, des lipides, des vitamines et des minéraux.

6. Lait modifié ou aliment de sevrage, se présentant aussi sous forme séchée et en poudre, comprenant une composition nutritive selon l'une quelconque des revendications 1 à 5.
